# EUROPÄISCHE PATENTSCHRIFT

(11) **EP 3 802 243 B1**
(45) Veröffentlichungstag und Bekanntmachung des Hinweises auf die Patenterteilung: **07.08.2024**
(21) Anmeldenummer: 19729692.4
(22) Anmeldetag: 04.06.2019
(51) Int. Cl.: B60T 7/12

(54) **VERFAHREN UND VORRICHTUNG ZUM VERHINDERN EINES UNERWÜNSCHTEN ODER UNKONTROLLIERTEN LOSROLLENS ODER LOSFAHRENS EINES SICH IM STILLSTAND BEFINDENDEN FAHRZEUGS**
METHOD AND DEVICE FOR PREVENTING AN UNWANTED OR UNCONTROLLED ROLLING OR DRIVING OF A VEHICLE AT STANDSTILL
PROCÉDÉ ET DISPOSITIF PERMETTANT D'ÉVITER QU'UN VÉHICULE SE TROUVANT À L'ARRÊT NE ROULE OU NE DÉMARRE DE MANIÈRE INTEMPESTIVE OU INCONTRÔLÉE

(30) Priorität: 11.06.2018 DE 102018113823
(43) Veröffentlichungstag der Anmeldung: 14.04.2021
(73) Patentinhaber: KNORR-BREMSE Systeme für Nutzfahrzeuge GmbH, 80809 München (DE)
(72) Erfinder: BELLING-HOFFMANN, Michael, 71272 Renningen (DE); POHLMANN, Maximilian, 76646 Bruchsal (DE)
(86) Internationale Anmeldenummer: PCT/EP2019/064401
(87) Internationale Veröffentlichungsnummer: WO 2019/238461

(56) Entgegenhaltungen:
- DE-A1- 102010 062 013
- DE-A1- 102016 210 365
- DE-A1- 102016 215 990

## Beschreibung

Die Erfindung betrifft ein Verfahren zum Verhindern eines unerwünschten oder unkontrollierten Losrollens oder Losfahrens eines sich im Stillstand befindenden Fahrzeugs gemäß dem Oberbegriff von Anspruch 1, eine Losroll- oder Losfahrverhinderungsvorrichtung zum Verhindern eines unerwünschten oder unkontrollierten Losrollens oder Losfahrens eines sich im Stillstand befindenden Fahrzeugs gemäß dem Oberbegriff von Anspruch 8 sowie ein Fahrzeug mit einer solchen Vorrichtung gemäß Anspruch 15 als auch ein Fahrzeug gesteuert nach einem solchen Verfahren nach Anspruch 16.

Oft sind Fahrzeuge sind mit passiven induktiven Raddrehzahlsensoren versehen, welche die Raddrehzahl erst bei Geschwindigkeiten größer als eine untere Grenzgeschwindigkeit (z.B. 5km/h) erfassen können. Dadurch können jedoch weder ein Stillstand des Fahrzeuges oder eine geringe Fahrgeschwindigkeit von beispielsweise weniger als 5km/h nicht zuverlässig erkannt werden. Darüber hinaus ist auch die Bewegungsrichtung des Fahrzeugs bei niedrigen Geschwindigkeiten oder Raddrehzahlen von Interesse.

Weiterhin sind aus dem Stand der Technik aktive Raddrehzahlsensoren bekannt, welche zwar einerseits geringe Geschwindigkeiten eines Fahrzeugs von beispielsweise weniger als 5km/h und auch die Bewegungsrichtung erkennen können. Jedoch sind solche aktiven Raddrehzahlsensoren relativ teuer, müssen eine Auswerteelektronik aufweisen und auch stromversorgt werden. Weiterhin sind diese aktiven Raddrehzahlsensoren bei größeren Nutzfahrzeugen mit relativ großem Luftspalt zwischen Signalgeber und Signalerfasser oft nicht praktikabel.

Probleme im Zusammenhang mit Fahrzeugen entstehen vor allem dann, wenn sich das Fahrzeug im Stillstand befinden soll, aber dann doch ein unkontrolliertes Losrollen beispielsweise an einem Hang oder ein unkontrolliertes aktives Losfahren stattfindet. Ein unkontrolliertes Losrollen eines Fahrzeugs kann beispielsweise dann stattfinden, wenn zwar eine Betriebsbremse, eine Feststellbremse oder Parkbremse das Fahrzeugs zwar sich in einem (teilweise) zugespannten Zustand befindet, aber die Zuspannkraft nicht ausreicht, um den Stillstand des Fahrzeugs zu gewährleisten. Ein unkontrolliertes aktives Losfahren eines Fahrzeugs kann beispielsweise dann stattfinden, wenn bei laufender Antriebsmaschine Leckagen im Kupplungssystem auftreten und dadurch eingekuppelt wird oder ein Fahrerassistenzsystem, welches ein automatisiertes oder autonomes Fahren ermöglicht, eine Fehlfunktion aufweist.

Ein gattungsgemäßes Verfahren und eine gattungsgemäße Vorrichtung sind aus DE 10 2016 210 365 A1 bekannt. DE 10 2016 215 990 A1 offenbart ein Verfahren zur Durchführung einer fahrerunabhängigen Bremskrafthaltefunktion bei einem Kraftfahrzeug bei dessen Stillstand an einer geneigten Fahrbahn und DE 10 2010 062 013 A1 ein Verfahren zum Halten eines Fahrzeugs im Stillstand.

Der vorliegenden Erfindung liegt die Aufgabe zugrunde, ein Verfahren zum Verhindern eines unerwünschten oder unkontrollierten Losrollens oder Losfahrens eines sich im Stillstand befindenden Fahrzeugs und eine Losroll- oder Losfahrverhinderungsvorrichtung zum Verhindern eines unerwünschten oder unkontrollierten Losrollens oder Losfahrens eines sich im Stillstand befindenden Fahrzeugs derart weiter zu entwickeln, dass das unerwünschte Losrollen oder unerwünschte Losfahren mit hoher Sicherheit und mit möglichst geringem Aufwand verhindert wird. Weiterhin soll auch ein Fahrzeug zur Verfügung gestellt werden, das nach einem mit solchen Verfahren gesteuert wird sowie auch ein Fahrzeug mit einer solchen Vorrichtung.

Dese Aufgabe durch die Merkmale der Ansprüche 1, 8, 15 und 16 gelöst.

### Offenbarung der Erfindung

Die Erfindung stellt ein Verfahren zum Verhindern eines unerwünschten oder unkontrollierten Losrollens oder Losfahrens eines sich im Stillstand befindenden Fahrzeugs zur Verfügung, bei welchem
a) wenigstens eine elektronische Steuereinrichtung eine Bremseinrichtung betätigen oder eine durch eine Bremseinrichtung bereits ausgeübte Bremswirkung erhöhen kann, und bei welchem
b) durch wenigstens einen, wenigstens einen Teil des Umfelds des Fahrzeugs erfassenden Umfelderfassungssensor, welcher an dem Fahrzeug verbaut ist,
   b1) aufgrund einer zeitlich konstanten festgestellten Position wenigstens eines erfassten externen Objekts in Bezug zu dem wenigstens einen Umfelderfassungssensor ein Stillstand des Fahrzeugs in Bezug zu dem wenigstens einen externen Objekt erkannt werden kann, und
   b2) aufgrund einer zeitlichen Veränderung der festgestellten Position des wenigstens einen erfassten externen Objekts in Bezug zu dem wenigstens einen Umfelderfassungssensor eine Relativbewegung des Fahrzeugs in Bezug zu dem wenigstens einen externen Objekt erkannt werden kann, wobei
c) falls ausgehend von einem durch den wenigstens einen Umfelderfassungssensor erkannten Stillstand des Fahrzeugs durch den wenigstens einen Umfelderfassungssensor eine unerwünschte oder unkontrollierte Relativbewegung des Fahrzeugs in Bezug zu dem wenigstens einen externen Objekt erkannt wird, die elektronische Steuereinrichtung veranlasst wird, automatisch die Bremseinrichtung zu betätigen oder eine durch die Bremseinrichtung bereits ausgeübte Bremswirkung zu erhöhen.

Bei dem Verfahren wird eine unerwünschte oder unkontrollierte Relativbewegung des Fahrzeugs in Bezug zu dem wenigstens einen externen Objekt erkannt, falls eine Überprüfung ergeben hat, dass kein gültiges Steuersignal für ein Losfahren oder Losrollen des Fahrzeugs vorliegt.

Weiterhin stellt die Erfindung eine Losroll- oder Losfahrverhinderungsvorrichtung zum Verhindern eines unerwünschten oder unkontrollierten Losrollens oder Losfahrens eines sich im Stillstand befindenden Fahrzeugs zur Verfügung, mit
a) wenigstens einer elektronischen Steuereinrichtung, welche ausgebildet ist, dass sie eine Bremseinrichtung betätigen oder eine durch eine Bremseinrichtung bereits ausgeübte Bremswirkung erhöhen kann, und mit
b) wenigstens einem, wenigstens einen Teil des Umfelds des Fahrzeugs erfassenden Umfelderfassungssensor, welcher an dem Fahrzeug verbaut ist und welcher Ausgangssignale in die wenigstens elektronische Steuereinrichtung einsteuert und ausgebildet ist, dass er
   b1) aufgrund einer zeitlich konstanten festgestellten Position wenigstens eines externen Objekts in Bezug zu dem wenigstens einen Umfelderfassungssensor einen Stillstand des Fahrzeugs in Bezug zu dem wenigstens einen externen Objekt erkennen kann, und dass er
   b2) aufgrund einer zeitlichen Veränderung der festgestellten Position des wenigstens eines externen Objekts in Bezug zu dem wenigstens einen Umfelderfassungssensor eine Relativbewegung des Fahrzeugs in Bezug zu dem wenigstens einen externen Objekt erkennen kann, wobei
c) die elektronische Steuereinrichtung und der wenigstens eine Umfelderfassungssensor derart zusammenwirken, dass falls ausgehend von einem durch den wenigstens einen Umfelderfassungssensor erkannten Stillstand des Fahrzeugs durch den wenigstens einen Umfelderfassungssensor eine Relativbewegung des Fahrzeug in Bezug zu dem wenigstens einen externen Objekt erkannt wird, die elektronische Steuereinrichtung veranlasst wird, automatisch die Bremseinrichtung zu betätigen oder eine durch die Bremseinrichtung bereits ausgeübte Bremswirkung zu erhöhen.

Weiterhin ist die elektronische Steuereinrichtung ausgebildet, dass sie eine unerwünschte oder unkontrollierte Relativbewegung des Fahrzeugs in Bezug zu dem wenigstens einen externen Objekt erkennt, falls sie durch eine Überprüfung festgestellt hat, dass kein gültiges Steuersignal für ein Losfahren oder Losrollen des Fahrzeugs vorliegt.

Eine solche Überprüfung kann beispielsweise dadurch erfolgen, dass Steuersignale, welche eine Betriebsbremseinrichtung, eine Feststellbremseinrichtung und/oder eine Parkbremseinrichtung und/oder eine Antriebsmaschine und/oder eine Kupplung und/oder ein Getriebe des Fahrzeugs steuern, von der elektronischen Steuereinrichtung dahingehend überwacht werden, ob ein Losfahren oder ein Losrollen des Fahrzeugs beabsichtigt ist oder nicht. Eine solche Überprüfung kann insbesondere eine Plausibilisierung dieser Steuersignale beinhalten. Weiterhin ist auch möglich, dass durch Selbst- und/oder Fremdüberwachung von die Betriebsbremseinrichtung, die Feststellbremseinrichtung und/oder die Parkbremseinrichtung und/oder die Antriebsmaschine und/oder die Kupplung und/oder das Getriebe des Fahrzeugs steuernden Steuergeräten eine Fehlfunktion des betreffenden Steuergeräts oder der betreffenden Steuergeräte erkannt wird, und aufgrund der erkannten Fehlfunktion dann ein Fehlersignal erzeugt wird, auf welches die elektronische Steuereinrichtung in Kombination mit der Auswertung der Ausgangssignale des wenigstens einen Umfelderfassungssensors dann auf ein ungewolltes oder unkontrolliertes Losrollen oder Losfahren des Fahrzeugs erkennt. Die Steuersignale der Steuergeräte und die Fehlersignale können insbesondere auf einem Datenbus zur Verfügung stehen, an welchen auch die elektronische Steuereinrichtung angeschlossen ist.

Ein ungewolltes Losrollen oder Losfahren des Fahrzeugs ist insbesondere bei einer Berganfahrhilfe oder einem Hillholder nachteilig, wie durch ein solches System gerade ein Stillstand des Fahrzeugs sichergestellt werden soll. Dabei wird die Situation einbezogen, dass etwa das Fahrzeug bereits mit der Betriebsbremseinrichtung oder mit der Feststellbremseinrichtung oder Parkbremseinrichtung bereits (automatisch) bis in Stillstand eingebremst wurde, dort gehalten wird, aber nach einiger Zeit trotzdem ungewollt losrollt.

Ursache für ein unerwünschtes oder unkontrolliertes Bewegen oder Losrollen oder Losfahren können insbesondere durch Fehlfunktionen hervorgerufen werden, etwa wenn Leckagen im Kupplungssystem auftreten und bei laufender Antriebsmaschine die Kupplung schließt. Auch Fehlfunktionen innerhalb eines System zum (teil)automatisierten Fahren können ein solches ungewolltes und unkontrolliertes Losrollen oder Losfahren eines Fahrzeugs hervorrufen.

Auch ist etwa denkbar, dass die Bremseinrichtung zwar (teilweise) zugespannt worden ist, jedoch weil sich das beladene Fahrzeug beispielsweise an einem Hang befindet, die Zuspannkraft nicht ausreicht, um ein Losrollen des Fahrzeugs zu verhindern. Dann wird gemäß der Erfindung die durch die Bremseinrichtung ausgeübte Bremswirkung oder Bremskraft bzw. das Bremsmoment automatisch erhöht und dadurch die Bremseinrichtung nachgespannt.

Unter einem externen Objekt soll ein Objekt verstanden werden, welches keinen Bestandteil des Fahrzeugs bildet und in Bezug zu dem Fahrzeug extern angeordnet ist. Unter der Annahme wenigstens eines stationären externen Objekts kann ein Stillstand des Fahrzeugs bzw. eine Relativbewegung des wenigstens einen Umfeldsensors und damit auch des Fahrzeugs in Bezug zu dem stationären externen Objekt erkannt werden.

Unter einem Umfelderfassungssensor soll ein Sensor verstanden werden, dessen Ausgangssignale dahingehend verwertbar sind, ob dieser Umfelderfassungssensor in Bezug zu einem sich im Umfeld des Umfelderfassungssensors befindlichen (stationären) Objekts eine Relativbewegung ausführt oder keine solche Relativbewegung stattfindet. Insbesondere kann der Umfelderfassungssensor Ausgangssignale liefern, welche es der elektronischen Steuereinrichtung ermöglichen, eine Relativgeschwindigkeit des Umfelderfassungssensors in Bezug zu dem (stationären) Objekt im Umfeld zu bestimmen.

Wenn beispielsweise der Umfelderfassungssensor durch eine am Fahrzeug verbaute Videokamera gebildet wird, dann kann anhand einer Verschiebung des externen Objekts in den von der Videokamera zeitlich hintereinander aufgenommenen Bildern eine Relativbewegung des Umfelderfassungssensors und damit des Fahrzeugs in Bezug zu dem externen Objekt erkannt werden. In analoger Weise kann anhand einer konstanten Position des externen Objekts in den von der Videokamera zeitlich hintereinander aufgenommenen Bildern ein Stillstand des Umfelderfassungssensors und damit des Fahrzeugs in Bezug zu dem externen Objekt erkannt werden.

Anhand der Verschiebung des externen Objekts in den von der Videokamera zeitlich hintereinander aufgenommenen Bildern kann dann auch erkannt werden, ob sich der wenigstens eine Umfelderfassungssensor und damit das Fahrzeug auf das wenigstens eine externe Objekt auf das Fahrzeug zu oder von ihm weg bewegen. Dies lässt dann beispielsweise auch einen Rückschluss auf eine Vorwärts- oder Rückwärtsfahrt des Fahrzeugs zu, wenn die Videokamera beispielsweise an der Front oder am Heck des Fahrzeugs verbaut ist.

Weil bei modernen Fahrzeugen in der Regel ohnehin Fahrerassistenzsysteme vorhanden sind, welche solche Umfelderfassungssensoren aufweisen, wie beispielsweise ein Tote-Winkel-Assistenzsystem, ein Notbremsassistenzsystem, ein Fußgängererkennungssystem, ein Spurhalteassistenzsystem, ein Adaptive Cruise Control (ACC) System, ein Einparkhilfesystem, erfordert das erfindungsgemäße Verfahren bzw. die erfindungsgemäße Vorrichtung keine zusätzliche Sensorik und insbesondere auch keine teuren eingangs beschriebenen aktiven Raddrehzahlsensoren. Vielmehr können die Ausgangssignale von ohnehin bereits vorhandenen Umfelderfassungssensoren für eine Auswertung herangezogen werden, ob sich das Fahrzeug (noch) im Stillstand befindet oder ob es ungewollt oder unbeabsichtigt losrollt oder losfährt.

Insbesondere ist der wenigstens eine Umfelderfassungssensor in der Lage, auch geringe Geschwindigkeiten des Fahrzeugs zu erfassen, welche beispielsweise kleiner als 5km/h sind, so dass bereits frühzeitig, d.h. bevor das Fahrzeug eine höhere Geschwindigkeit aufweist, durch das dann automatisch erfolgende Zuspannen oder Nachspannen der Bremseinrichtung eine gefährliche Situation vermieden werden kann.

In der elektronischen Steuereinrichtung sind insbesondere Auswerteroutinen implementiert, welche die Ausgangssignale des wenigstens einen Umfelderfassungssensor dahingehend auswerten, ob sich das Fahrzeug im Stillstand befindet oder ob es losrollt oder losfährt.

Durch die in den Unteransprüchen aufgeführten Maßnahmen sind vorteilhafte Weiterbildungen und Verbesserungen der Erfindung möglich.

Die elektronische Steuereinrichtung bzw. die Routinen, durch welche das erfindungsgemäße Verfahren gesteuert wird, können in einer separaten elektronischen Steuereinrichtung implementiert sein oder auch in einem Steuergerät integriert sein, welches darüber hinaus für weitere Steuer- oder Regelaufgaben vorgesehen ist, beispielsweise in einem elektronischen Bremssteuergerät.

Gemäß einer Weiterbildung des Verfahrens können bei einem durch den wenigstens einen Umfelderfassungssensor erkannten Stillstand des Fahrzeugs die Ausgangssignale des wenigstens einen Umfelderfassungssensors daraufhin überwacht werden, ob ein unerwünschtes oder unkontrolliertes Losrollen oder Losfahren des Fahrzeugs aus dem Stillstand stattfindet oder stattgefunden hat.

Gemäß einer Weiterbildung der Vorrichtung kann die elektronische Steuereinrichtung ausgebildet sein, dass sie bei einem durch den wenigstens einen Umfelderfassungssensor erkannten Stillstand des Fahrzeugs die Ausgangssignale des wenigstens einen Umfelderfassungssensors daraufhin überwacht, ob ein unerwünschtes oder unkontrolliertes Losrollen oder Losfahren des Fahrzeugs aus dem Stillstand stattfindet oder stattgefunden hat.

Dabei wird der Stillstand des Fahrzeugs bereits anhand der Ausgangssignale des wenigstens einen Umfelderfassungssensors erkannt und durch eine Überwachung dieser Ausgangssignale beispielsweise durch die elektronische Steuereinrichtung dann festgestellt, ob ein unerwünschtes oder unkontrolliertes Losrollen oder Losfahren des Fahrzeugs aus dem Stillstand stattfindet oder stattgefunden hat.

Gemäß einer Weiterbildung des Verfahrens wird auf ein unerwünschtes oder unkontrolliertes Losrollen oder Losfahren des Fahrzeugs auf der Basis der Ausgangssignale des wenigstens einen Umfelderfassungssensor dann erkannt, wenn aufgrund der Ausgangssignale feststeht, dass das Fahrzeug eine vorgegebene Grenzgeschwindigkeit in Bezug zu dem wenigstens einen externen Objekt überschreitet oder überschritten hat.

Gemäß einer Weiterbildung der Vorrichtung ist die elektronische Steuereinrichtung ausgebildet, dass sie ein unerwünschtes oder unkontrolliertes Losrollen oder Losfahren des Fahrzeugs auf der Basis der Ausgangssignale des wenigstens einen

Umfelderfassungssensors erkannt und durch eine Überwachung dieser Ausgangssignale beispielsweise durch die elektronische Steuereinrichtung dann festgestellt, ob ein unerwünschtes oder unkontrolliertes Losrollen oder Losfahren des Fahrzeugs aus dem Stillstand stattfindet oder stattgefunden hat.

Gemäß einer Weiterbildung des Verfahrens oder der Vorrichtung kann die Bremseinrichtung, welche automatisch zugespannt oder nachgespannt wird, wenn eine Bewegung bzw. ein unerwünschtes Losrollen oder Losfahren des Fahrzeugs erkannt wird, eine Betriebsbremseinrichtung oder eine Feststellbremseinrichtung des Fahrzeugs sein.

Weil vorzugsweise bei einem Losrollen oder Losfahren des Fahrzeugs bei bereits geringen Geschwindigkeiten ein automatisches Zuspannen oder Nachspannen der Bremseinrichtung stattfinden soll, kann anstatt einer Betriebsbremseinrichtung auch eine Feststellbremseinrichtung oder Parkbremseinrichtung zugespannt werden. Weil Feststellbremseinrichtungen oder Parkbremseinrichtungen von Nutzfahrzeugen in der Regel passive Federspeicherbremszylinder aufweisen, bei welchen eine Speicherfeder die Feststellbremse beim Entlüften einer Bremskammer zuspannt und beim Belüften der Bremskammer löst, wird nimmt das Fahrzeug dann einen sicheren eingebremsten Zustand ein.

Gemäß einer Weiterbildung des Verfahrens und der Vorrichtung werden beispielsweise die Ausgangssignale des wenigstens einen Umfelderfassungssensors darüber hinaus innerhalb wenigstens eines der folgenden Fahrerassistenzsysteme des Fahrzeugs ausgewertet: Ein Tote-Winkel-Assistenzsystem, ein Notbremsassistenzsystem, ein Fußgängererkennungssystem, ein Spurhalteassistenzsystem, ein Adaptive Cruise Control (ACC) System, ein Einparkhilfesystem.

Folglich weist der wenigstens eine Umfelderfassungssensor eine vorteilhafte Doppelfunktion auf, indem er einerseits dazu dient, ein Losrollen oder Losfahren des Fahrzeugs zu erkennen, andererseits aber darüber hinaus auch seine ursprünglich vorgesehene Funktion innerhalb des Fahrerassistenzsystem wahrnimmt.

Gemäß einer Weiterbildung des Verfahrens und der Vorrichtung ist der wenigstens eine Umfelderfassungssensor einer der folgenden Umfelderfassungssensoren: Ein Ultraschallsensor, eine (Video-)Kamera, ein Lidarsensor, ein Infrarotsensor, ein Radarsensor. Selbstverständlich können auch jeweils mehrere solcher Umfelderfassungsensoren, auch solche unterschiedlicher Art herangezogen werden.

Solche Umfelderfassungssensoren sind in der Regel auch ausgebildet, dass sie eine Bewegungsrichtung des Fahrzeugs relativ zu dem wenigstens einen externen Objekt erkennen

Ultraschallsensoren werden in der Regel innerhalb eines Einparkhilfesystems eines Fahrzeugs verbaut, für ein Tote-Winkel-Assistenzsystem werden in der Regel Kameras, Ultraschall-, Infrarot- oder Seitenradarsensoren verwendet.

Die Erfindung umfasst auch ein Fahrzeug mit einer oben beschriebenen Losroll- oder Losfahrverhinderungsvorrichtung und auch ein Fahrzeug, welches nach einem oben beschriebenen Verfahren gesteuert ist.

### Zeichnung

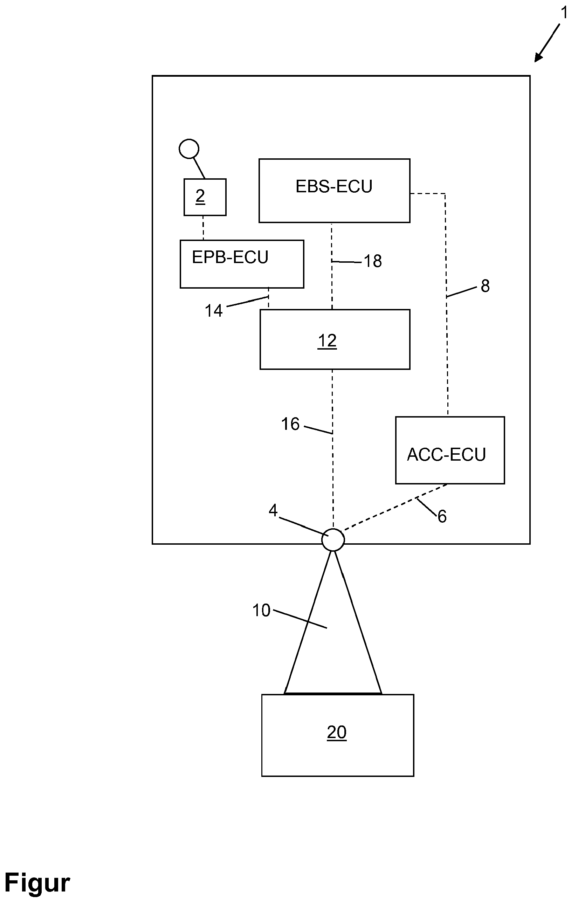

Nachstehend ist ein Ausführungsbeispiel der Erfindung in der Zeichnung dargestellt und in der nachfolgenden Beschreibung näher erläutert. In der Zeichnung zeigt die einzige Figur eine stark schematisierte Ansicht eines Kraftfahrzeugs.

### Beschreibung des Ausführungsbeispiels

In der Figur ist eine stark schematisierte Ansicht eines schweren Nutzfahrzeugs 1 dargestellt, welches beispielsweise eine elektropneumatische Betriebsbremseinrichtung mit aktiven pneumatischen Betriebsbremszylindern und eine elektropneumatische Feststellbremseinrichtung mit passiven pneumatischen Federspeicherbremszylindern aufweist. Die elektropneumatische Betriebsbremseinrichtung ist beispielsweise ein elektronisch bremsdruckgeregeltes Bremssystem, bei welchem die Bremsdrücke in den Betriebsbremszylindern beispielsweise auf Sollwerte eingeregelt werden. Hierzu dienen hier nicht gezeigte Druckregelmodule mit integrierten Drucksensoren, welche von einer EBS-ECU elektronisch gesteuert werden.

Die elektropneumatische Feststellbremseinrichtung mit den passiven pneumatischen Federspeicherbremszylindern wird von einer EPB-ECU elektronisch gesteuert, welche von einer elektrischen Feststellbremsbetätigungseinrichtung 2 zum Zuspannen und Lösen der Feststellbremse gesteuert ist.

Das Nutzfahrzeug 1 ist beispielsweise mit einem Abstandsregeltempomaten oder einer Adaptive Cruise Control (ACC) ausgerüstet, bei welchem der Abstand und die Relativgeschwindigkeit zu einem vorausfahrenden Fahrzeugs mit einem Sensor ermittelt und dann der Abstand und die Geschwindigkeit entsprechend adaptiv mit Motor- und/oder Bremseingriff auf Sollwerte geregelt (Längsregelung) wird.

Zur Abstandsmessung wird hier beispielsweise ein an der Front des Nutzfahrzeugs verbauter Radarsensor 4 eingesetzt, welcher beispielsweise mit einer Leistung von ca. 10 mW arbeitet. Die für diese Applikation zugelassene Radarfrequenz liegt meist im Bereich 76-77 GHz, entsprechend einer Wellenlänge von etwa 4 mm. Alternativ kann auch für das ACC-System ein Lidarsensor verwendet werden, welcher mit einer Strahlung im Infrarotbereich arbeitet. Der Radarsensor 4 ist über eine erste Signalleitung 6 mit einer ACC-ECU verbunden, welche abhängig vom Abstand und der Geschwindigkeit des Nutzfahrzeugs 1 in Bezug zu einem voraus fahrenden Fahrzeug die Betriebsbremseinrichtung betätigt und/oder die Leistung einer Antriebsmaschine reduziert, um den Abstand zu dem voraus fahrenden Fahrzeug beispielsweise konstant zu halten. Zur Betätigung der elektropneumatischen Betriebsbremseinrichtung ist die ACC-ECU über eine zweite Signalleitung 8 mit der EBS-ECU verbunden.

In der Figur zu erkennen ist außerdem der Erfassungskegel 10 des Radarsensors 4 ausgehend von der Front des Nutzfahrzeugs 1.

Das Nutzfahrzeug 1 ist beispielsweise weiterhin mit einer Berganfahrhilfe oder einem Berganfahrassistent (Hillholder) ausgerüstet, worunter eine automatisierte Unterstützung für Kraftfahrzeuge beim Anfahren an Steigungen verstanden wird, durch die ein Zurückrollen verhindert wird. Bei der Berganfahrhilfe wird der vom Fahrer zuvor in die Betriebsbremseinrichtung eingebrachte pneumatische Bremsdruck in den pneumatischen Betriebsbremszylindern eingesperrt. Löst nun der Fahrer das Bremspedal, um anzufahren, verbleibt der Bremsdruck in den Betriebsbremszylindern. Ein Zurückrollen des Fahrzeugs soll folglich verhindert werden. Sobald der Fahrer wieder Gas gibt, wird bei einem im Steuergerät des Systems festgelegten Drehmomentwert des Motors die Bremse gelöst. Die Routinen des Berganfahrassistenten sind hier beispielsweise in der EBS-ECU implementiert.

Wenn beispielsweise aufgrund einer Fehlfunktion in der Berganfahrhilfe Bremsdruck aus den Betriebsbremszylindern entweicht, beispielsweise aufgrund einer eigentlich nicht beabsichtigten Öffnens eines Auslassventils infolge eines Softwarefehlers, so würde die Betriebsbremse gelöst und dadurch das Nutzfahrzeug 1 unkontrolliert ins Rollen geraten, insbesondere wenn es zuvor an einem Hang abgebremst wurde.

Um ein unkontrolliertes Wegrollen oder Losrollen des Nutzfahrzeugs 1 infolge einer solchen Fehlfunktion zu vermeiden, ist das Nutzfahrzeug zusätzlich mit einer Losrolloder Losfahrverhinderungsvorrichtung zum Verhindern eines unerwünschten oder unkontrollierten Losrollens oder Losfahrens des Nutzfahrzeugs 1 aus dem Stillstand versehen.

Die Losroll- oder Losfahrverhinderungsvorrichtung weist eine elektronische Steuereinrichtung 12 auf, welche ausgebildet ist, dass sie hier beispielsweise die elektropneumatische Feststellbremseinrichtung betätigen kann. Über eine vierte Signalleitung 14 kann beispielsweise die elektronische Steuereinrichtung die EPB-ECU der Feststellbremseinrichtung zum Zuspannen und Lösen der Feststellbremse steuern.

Weiterhin ist die elektronische Steuereinrichtung 12 über eine fünfte Signalleitung 16 mit dem Radarsensor 4 verbunden, um dessen Ausgangssignale auszuwerten. Weiterhin ist auch die EBS-ECU, in welcher die Routinen der Berganfahrhilfe implementiert sind, über eine sechste Signalleitung mit der elektronischen Steuereinrichtung 12 der Losroll- oder Losfahrverhinderungsvorrichtung verbunden.

Der Radarsensor 4 ist ausgebildet, dass er aufgrund einer zeitlich konstanten festgestellten Position eines stationären externen Objekts 20, welches hier beispielsweise durch einen Masten am Fahrbahnrand gebildet wird, relativ zum Radarsensor 4 einen Stillstand des Nutzfahrzeugs 1 erkennen kann, weiterhin auch, dass er aufgrund einer zeitlichen Veränderung der festgestellten Position des externen Objekts 20 in Bezug zu dem Radarsensor 4 eine Relativbewegung des Nutzfahrzeugs 1 in Bezug zu dem externen Objekt 20 erkennen kann. In der elektronischen Steuereinrichtung 12 sind dann Routinen implementiert, welche eine entsprechende Auswertung der Ausgangssignale des Radarsensors 4 zum Erkennen eines Stillstands oder einer Bewegung des Nutzfahrzeugs 1 relativ zu dem stationären externen Objekt 20 ermöglichen.

Die elektronische Steuereinrichtung 12 und der Radarsensor 4 wirken dann derart zusammen, dass falls ausgehend von einem durch den Radarsensor 4 erkannten Stillstand des Nutzfahrzeugs 1 durch den Radarsensor 4 eine sich daran zeitlich anschließende Relativbewegung des Nutzfahrzeug 1 in Bezug zu dem externen Objekt 20 erkannt wird und dann die implementierten Routinen die elektronische Steuereinrichtung 12 veranlassen, automatisch hier beispielsweise die Feststellbremseinrichtung zu betätigen.

Da wie oben beschrieben im vorliegenden Fall die Berganfahrhilfe zwar zunächst die Betriebsbremseinrichtung zugespannt hat, um das Nutzfahrzeug 1 am Hang eingebremst zu halten, jedoch aufgrund einer Fehlfunktion in der Steuerung EBS-ECU der Berganfahrhilfe die Betriebsbremseinrichtung ungewollt gelöst wurde, so rollt das Nutzfahrzeug 1 am Hang zunächst unkontrolliert an.

Da der elektronischen Steuereinrichtung 12 der Losroll- oder Losfahrverhinderungsvorrichtung über die sechste Signalleitung 18 von der EBS-ECU jedoch ein Signal übermittelt wurde, welches einen gewünschten Stillstand des Nutzfahrzeugs innerhalb der Berganfahrhilfefunktion signalisiert, überwacht nun die elektronische Steuereinrichtung 12 der Losroll- oder Losfahrverhinderungsvorrichtung mit Hilfe des Radarsensors 4 den Stillstand des Nutzfahrzeugs 1. Aufgrund der Fehlfunktion der Berganfahrhilfe ist es aber im vorliegenden Fall zu einem unbeabsichtigten Losrollen des Nutzfahrzeugs 1 gekommen, bei welchem eine vorgegeben Grenzgeschwindigkeit von beispielsweise 3km/h überschritten wurde. Diese Überschreitung registriert die elektronische Steuereinrichtung 12 der Losroll- oder Losfahrverhinderungsvorrichtung über die Ausgangssignale des Radarsensors 4 und steuert dann über die vierte Signalleitung 14 Zuspannsignale in die EPB-ECU der Feststellbremseinrichtung ein, um die Feststellbremse automatisch zuzuspannen.

Die EBS-ECU könnte aber auch mit einer Selbstüberwachungsfunktion in Bezug auf die integrierte Berganfahrhilfefunktion aufweisen, wobei dann die Fehlfunktion durch die Selbstüberwachungsfunktion erkannt und dann von der EBS-ECU über die sechtse Signalleitung 18 dann ein Fehlersignal in die elektronische Steuereinrichtung 12 der Losroll- oder Losfahrverhinderungsvorrichtung eingesteuert wird, welche dann mit Hilfe des Radarsensors 4 den Stillstand des Nutzfahrzeugs 1 überwacht und bei einem Losrollen des Nutzfahrzeugs 1 die Feststellbremse zuspannt.

Der Grund für die automatische Ansteuerung der Feststellbremseinrichtung durch die elektronische Steuereinrichtung 12 der Losroll- oder Losfahrverhinderungsvorrichtung liegt darin, dass im vorliegenden Fall offenbar die EBS-ECU eine Fehlfunktion aufweist und daher entweder nicht mehr oder nur eingeschränkt funktionsfähig ist. Weil die untere Grenzgeschwindigkeit, ab welcher das automatische Zuspannen der Feststellbremseinrichtung erfolgt relativ niedrig ist, spricht hier nichts gegen eine Verwendung der Feststellbremseinrichtung, um den Stillstand des Nutzfahrzeugs 1 sicherzustellen. Weiterhin befindet sich das Nutzfahrzeug 1 dann in einem sicheren abgebremsten Zustand, welcher sich auch bei einem Druckluftverlust in der Feststellbremseinrichtung wegen der passiven Federspeicherbremszylinder auch nicht mehr ändert.

Daneben ist natürlich auch denkbar, dass etwa die Betriebsbremseinrichtung durch die elektronische Steuereinrichtung 12 der Losroll- oder Losfahrverhinderungsvorrichtung bei einem detektierten Losrollen des Nutzfahrzeugs 1 zugespannt wird, wenn beispielsweise lediglich der pneumatische Bremsdruck der letzten durch den Fahrer ausgelösten Betriebsbremsung nicht ausreichend war, um das Nutzfahrzeug 1 am Hang eingebremst zu halten. In einem solchen Fall könnte bei einer Detektion eines unbeabsichtigten Losrollens des Nutzfahrzeugs 1 durch den Radarsensor4 in Kombination mit der elektronischen Steuereinrichtung 12 der Losroll- oder Losfahrverhinderungsvorrichtung der Bremsdruck in den Betriebsbremszylindern durch eine entsprechende Ansteuerung der EBS-ECU erhöht werden, um die Betriebsbremseinrichtung nachzuspannen.

Weiterhin sind auch Fälle denkbar, in welchen etwa ein Fahrerassistenzsystem für automatisiertes Fahren aufgrund einer Fehlfunktion ein Signal erzeugt, welches ein Losfahren des Nutzfahrzeugs 1 nach sich zieht, d.h. ein Lösen der Bremse, ein Einlegen eines Fahrgangs und eine Leistungserhöhung der Antriebsmaschine, obwohl anhand weiterer Signale klar oder plausibel ist, dass ein solches Losfahren des Nutzfahrzeugs 1 eigentlich nicht erwünscht ist, beispielsweise in dem Fall, in welchem sich wie hier ein stationäres externes Objekt 20 nahe vor dem Nutzfahrzeug 1 befindet. Dann könnte ausgelöst durch ein empfangenes Fehlersignal, welches beispielsweise auf einer Plausibilisierung der Losfahrsituation basiert, die elektronische Steuereinrichtung 12 der Losroll- oder Losfahrverhinderungsvorrichtung den Bewegungszustand des Nutzfahrzeugs über den Radarsensor 4 überwachen und bei einem festgestellten Losfahren beispielsweise die Betriebsbremseinrichtung automatisch zuspannen.

Es ist klar, dass die Sensorik zur Überwachung des Stillstands des Nutzfahrzeugs 1 nicht auf einen an der Front verbauten Radarsensor 4 beschränkt ist. Mithin ist jeder an einem Nutzfahrzeug oder Fahrzeug an irgendeiner Stelle verbauter Umfelderfassungssensor denkbar, mit dessen Hilfe ein Stillstand oder eine Relativbewegung des Nutzfahrzeugs 1 in Bezug zu einem externen Objekt 20 detektierbar ist. Beispielsweise können hierzu auch ein am Nutzfahrzeug 1 zu eigentlich anderen Zwecken verbauter Umfelderfassungssensor wie etwa ein Ultraschallsensor, eine (Video-)Kamera, ein Lidarsensor, oder ein Infrarotsensor verwendet werden.

Anstatt als Stand-Alone-Steuereinrichtung ausgeführt, könnte die elektronische Steuereinrichtung 12 bzw. deren Routinen auch in einer weiteren Steuereinrichtung integriert sein, beispielsweise in der EBS-ECU. Weiterhin könnten die hier vorhandenen Steuergeräte wie die EBS-ECU, die EPB-ECU, die ACC-ECU und die elektronische Steuereinrichtung an einen gemeinsamen Datenbus angeschlossen sein, um Daten und Signale untereinander auszutauschen.

### Bezugszeichenliste

- 1: Fahrzeug
- 2: Feststellbremsbetätigungseinrichtung
- 4: Radarsensor
- 6: erste Signalleitung
- 8: zweite Signalleitung
- 10: Erfassungskegel
- 12: elektronische Steuereinrichtung
- 14: zweite Signalleitung
- 16: fünfte Signalleitung
- 18: sechste Signalleitung
- 20: Objekt
- ACC-ECU: Steuergerät des ACC-Systems
- EBS-ECU: Steuergerät der elektropneumatischen Betriebsbremseinrichtung
- EPB-ECU: Steuergerät der elektropneumatischen Feststellbremseinrichtung

## Patentansprüche

1. Verfahren zum Verhindern eines unerwünschten oder unkontrollierten Losrollens oder Losfahrens eines sich im Stillstand befindenden Fahrzeugs (1), bei welchem
a) wenigstens eine elektronische Steuereinrichtung (12) eine Bremseinrichtung betätigen oder eine durch eine Bremseinrichtung bereits ausgeübte Bremswirkung erhöhen kann, und bei welchem
b) durch wenigstens einen, wenigstens einen Teil des Umfelds des Fahrzeugs (1) erfassenden Umfelderfassungssensor (4), welcher an dem Fahrzeug (1) verbaut ist,
b1) aufgrund einer zeitlich konstanten festgestellten Position wenigstens eines erfassten externen Objekts (20) in Bezug zu dem wenigstens einen Umfelderfassungssensor (4) ein Stillstand des Fahrzeugs (1) in Bezug zu dem wenigstens einen externen Objekt (209 erkannt werden kann, und
b2) aufgrund einer zeitlichen Veränderung der festgestellten Position des wenigstens einen erfassten externen Objekts (20) in Bezug zu dem wenigstens einen Umfelderfassungssensor (4) eine Relativbewegung des Fahrzeugs (1) in Bezug zu dem wenigstens einen externen Objekt (20) erkannt werden kann, wobei
c) falls ausgehend von einem durch den wenigstens einen Umfelderfassungssensor (4) erkannten Stillstand des Fahrzeugs (1) durch den wenigstens einen Umfelderfassungssensor (4) eine unerwünschte oder unkontrollierte Relativbewegung des Fahrzeugs (1) in Bezug zu dem wenigstens einen externen Objekt (20) erkannt wird, die elektronische Steuereinrichtung (12) veranlasst wird, automatisch die Bremseinrichtung zu betätigen oder eine durch die Bremseinrichtung bereits ausgeübte Bremswirkung zu erhöhen, **dadurch gekennzeichnet, dass**
d) auf eine unerwünschte oder unkontrollierte Relativbewegung des Fahrzeugs (1) in Bezug zu dem wenigstens einen externen Objekt (20) erkannt wird, falls eine Überprüfung ergeben hat, dass kein gültiges Steuersignal für ein Losfahren oder Losrollen des Fahrzeugs (1) vorliegt.

2. Verfahren nach Anspruch 1, **dadurch gekennzeichnet, dass** bei einem durch den wenigstens einen Umfelderfassungssensor (4) erkannten Stillstand des Fahrzeugs (1) die Ausgangssignale des wenigstens einen Umfelderfassungssensors (4) daraufhin überwacht werden, ob ein unerwünschtes oder unkontrolliertes Losrollen oder Losfahren des Fahrzeugs (1) aus dem Stillstand stattfindet oder stattgefunden hat.

3. Verfahren nach einem der vorhergehenden Ansprüche, **dadurch gekennzeichnet, dass** auf ein unerwünschtes oder unkontrolliertes Losrollen oder Losfahren des Fahrzeugs (1) auf der Basis der Ausgangssignale des wenigstens einen Umfelderfassungssensors (4) dann erkannt wird, wenn aufgrund der Ausgangssignale feststeht, dass das Fahrzeug (1) eine vorgegebene Grenzgeschwindigkeit in Bezug dem wenigstens einen externen Objekt (20) überschreitet oder überschritten hat.

4. Verfahren nach einem der vorhergehenden Ansprüche, **dadurch gekennzeichnet, dass** die Bremseinrichtung eine Betriebsbremseinrichtung oder eine Feststellbremseinrichtung des Fahrzeugs ist.

5. Verfahren nach einem der vorhergehenden Ansprüche, **dadurch gekennzeichnet, dass** die Ausgangssignale des wenigstens einen Umfelderfassungssensors (4) darüber hinaus innerhalb wenigstens eines der folgenden Fahrerassistenzsysteme des Fahrzeugs ausgewertet werden: Ein Tote-Winkel-Assistenzsystem, ein Notbremsassistenzsystem, ein Fußgängererkennungssystem, ein Spurhalteassistenzsystem, ein Adaptive Cruise Control (ACC) System, ein Einparkhilfesystem.

6. Verfahren nach einem der vorhergehenden Ansprüche, **dadurch gekennzeichnet, dass** als der wenigstens eine Umfelderfassungssensor (4) einer der folgenden Umfelderfassungssensoren herangezogen wird: Ein Ultraschallsensor, eine Kamera, ein Lidarsensor, ein Infrarotsensor, ein Radarsensor.

7. Verfahren nach einem der vorhergehenden Ansprüche, **dadurch gekennzeichnet, dass** der wenigstens eine Umfelderfassungssensor (4) ausgebildet ist, dass er eine Bewegungsrichtung des Fahrzeugs (1) relativ zu dem wenigstens einen externen Objekt (20) erkennt.

8. Losroll- oder Losfahrverhinderungsvorrichtung zum Verhindern eines unerwünschten oder unkontrollierten Losrollens oder Losfahrens eines sich im Stillstand befindenden Fahrzeugs (1), mit
a) wenigstens einer elektronischen Steuereinrichtung (12), welche ausgebildet ist, dass sie eine Bremseinrichtung betätigen oder eine durch eine Bremseinrichtung bereits ausgeübte Bremswirkung erhöhen kann, und mit
b) wenigstens einem, wenigstens einen Teil des Umfelds des Fahrzeugs (1) erfassenden Umfelderfassungssensor (4), welcher an dem Fahrzeug (1) verbaut ist und welcher Ausgangssignale in die wenigstens elektronische Steuereinrichtung (12) einsteuert und ausgebildet ist, dass er
b1) aufgrund einer zeitlich konstanten festgestellten Position wenigstens eines externen Objekts (20) in Bezug zu dem wenigstens einen Umfelderfassungssensor (4) einen Stillstand des Fahrzeugs (1) in Bezug zu dem wenigstens einen externen Objekt (20) erkennen kann, und dass er
b2) aufgrund einer zeitlichen Veränderung der festgestellten Position des wenigstens eines externen Objekts (20) in Bezug zu dem wenigstens einen Umfelderfassungssensor 84) eine Relativbewegung des Fahrzeugs (1) in Bezug zu dem wenigstens einen externen Objekt (20) erkennen kann, wobei
c) die elektronische Steuereinrichtung (12) und der wenigstens eine Umfelderfassungssensor (4) derart zusammenwirken, dass falls ausgehend von einem durch den wenigstens einen Umfelderfassungssensor (4) erkannten Stillstand des Fahrzeugs 81) durch den wenigstens einen Umfelderfassungssensor (4) eine Relativbewegung des Fahrzeugs (1) in Bezug zu dem wenigstens einen externen Objekt (20) erkannt wird, die elektronische Steuereinrichtung (12) veranlasst wird, automatisch die Bremseinrichtung zu betätigen oder eine durch die Bremseinrichtung bereits ausgeübte Bremswirkung zu erhöhen, **dadurch gekennzeichnet, dass**
d) die elektronische Steuereinrichtung (12) ausgebildet ist, dass sie eine unerwünschte oder unkontrollierte Relativbewegung des Fahrzeugs (1) in Bezug zu dem wenigstens einen externen Objekt (20) erkennt, falls sie durch eine Überprüfung festgestellt hat, dass kein gültiges Steuersignal für ein Losfahren oder Losrollen des Fahrzeugs (1) vorliegt.

9. Losroll- oder Losfahrverhinderungsvorrichtung nach Anspruch 8, **dadurch gekennzeichnet, dass** die elektronische Steuereinrichtung (12) ausgebildet ist, dass sie bei einem durch den wenigstens einen Umfelderfassungssensor (4) erkannten Stillstand des Fahrzeugs (1) die Ausgangssignale des wenigstens einen Umfelderfassungssensors (4) daraufhin überwacht, ob ein unerwünschtes oder unkontrolliertes Losrollen oder Losfahren des Fahrzeugs (1) aus dem Stillstand stattfindet oder stattgefunden hat.

10. Losroll- oder Losfahrverhinderungsvorrichtung nach einem der Ansprüche 8 oder 9, **dadurch gekennzeichnet, dass** die elektronische Steuereinrichtung (12) ausgebildet ist, dass sie ein unerwünschtes oder unkontrolliertes Losrollen oder Losfahren des Fahrzeugs (1) auf der Basis der Ausgangssignale des wenigstens einen Umfelderfassungssensors (4) dann erkennt, wenn die Ausgangssignale erkennen lassen, dass eine vorgegebene Grenzgeschwindigkeit überschritten wird oder überschritten worden ist.

11. Losroll- oder Losfahrverhinderungsvorrichtung nach einem der Ansprüche 8 bis 10, **dadurch gekennzeichnet, dass** die Bremseinrichtung eine Betriebsbremseinrichtung oder eine Feststellbremseinrichtung des Fahrzeugs ist.

12. Losroll- oder Losfahrverhinderungsvorrichtung nach einem der Ansprüche 8 bis 11, **dadurch gekennzeichnet, dass** die Ausgangssignale des wenigstens einen Umfelderfassungssensors (4) darüber hinaus innerhalb wenigstens eines der folgenden Fahrerassistenzsysteme des Fahrzeugs (1) verwertet werden: Ein Tote-Winkel-Assistenzsystem, ein Notbremsassistenzsystem, ein Fußgängererkennungssystem, ein Spurhalteassistenzsystem, ein Adaptive Cruise Control (ACC) System, ein Einparkhilfesystem.

13. Losroll- oder Losfahrverhinderungsvorrichtung nach einem der Ansprüche 8 bis 12, **dadurch gekennzeichnet, dass** der wenigstens eine Umfelderfassungssensor (4) einer der folgenden Umfelderfassungssensoren ist: Ein Ultraschallsensor, eine Kamera, ein Lidarsensor, ein Infrarotsensor, ein Radarsensor.

14. Losroll- oder Losfahrverhinderungsvorrichtung nach einem der Ansprüche 8 bis 13, **dadurch gekennzeichnet, dass** der wenigstens eine Umfelderfassungssensor (4) ausgebildet ist, dass er eine Bewegungsrichtung des Fahrzeugs (1) relativ zu dem wenigstens einen externen Objekt (20) erkennt.

15. Fahrzeug mit einer Losroll- oder Losfahrverhinderungsvorrichtung nach einem der Ansprüche 8 bis 14.

16. Fahrzeug gesteuert nach einem Verfahren nach einem der Ansprüche 1 bis 7.

## Claims

1. Method for preventing an undesired or uncontrolled rolling or driving of a vehicle (1) at standstill, in which
a) at least one electronic control apparatus (12) is able to actuate a braking apparatus or to increase a braking effect already effected by a braking apparatus, and in which
b) by means of at least one environment detecting sensor (4), detecting at least a part of the environment of the vehicle (1), which is installed at the vehicle (1),
b1) on the basis of a temporally constant determined position of at least one detected external object (20) in relation to the at least one environment detecting sensor (4) a standstill of the motor vehicle (1) in relation to the at least one external object (20) can be recognized, and
b2) on the basis of a temporal change in the determined position of the at least one detected external object (20) in relation to the at least one environmental detecting sensor (4) a relative movement of the vehicle (1) in relation to the at least one external object (20) can be recognized, wherein
c) in the case that, starting from a standstill of the vehicle (1) recognized by the at least one environment detecting sensor (4) by means of the at least one environment detecting sensor (4) an undesired or uncontrolled relative movement of the vehicle (1) in relation to the at least one external object (20) is recognized, the electronic control apparatus (12) is prompted to actuate the braking apparatus automatically order to increase a braking effect already effected by a braking apparatus, **characterised in that**
d) an undesired or uncontrolled relative movement of the vehicle (1) in relation to the at least one external object (20) is recognized, in the case that a verification has revealed that there is no valid control signal for a driving or rolling of the vehicle (1).

2. Method according to claim 1, **characterised in that** in the case of a standstill of the vehicle (1) recognized by the at least one environment detecting sensor (4), the initial signals of the at least one environment detecting sensor (4) are monitored to find out whether an undesired or uncontrolled rolling or driving of the vehicle (1) out of the standstill is taking place or has taken place.

3. Method according to any of the preceding claims, **characterised in that** an undesired or uncontrolled rolling or driving of the vehicle (1) on the basis of the initial signals of the at least one environment detecting sensor (4) is recognized when on the basis of the initial signals it is certain that the vehicle (1) is exceeding or has exceeded a predetermined threshold speed in relation to the at least one external object (20).

4. Method according to any of the preceding claims, **characterised in that** the braking apparatus is a service braking apparatus or a parking braking apparatus of the vehicle.

5. Method according to any of the preceding claims, **characterised** inthat the initial signals of the at least one environment detecting sensor (4) are evaluated in addition within at least one of the following driver assistance systems of the vehicle: a blind spot assistance system, an emergency braking assistance system, a pedestrian detecting system, a lane keeping assistance system, an adaptive cruise control (ACC) system, a parking assistance system.

6. Method according to any of the preceding claims, **characterised in that** as the at least one environment detecting sensor (4) one of the following environment detecting sensors is used: an ultrasound sensor, a camera, a lidar sensor, an infrared sensor, a radar sensor.

7. Method according to any of the preceding claims, **characterised in that** the at least one environment detecting sensor (4) is configured to recognize a direction of movement of the vehicle (1) relative to the at least one external object (20).

8. Rolling or driving prevention device for preventing an undesired or uncontrolled rolling or driving of a vehicle (1) being at a standstill, having
a) at least one electronic control apparatus (12) which is able to actuate a braking apparatus or to increase a braking effect already effected by a braking apparatus, and having
b) at least one environment detecting sensor (4), detecting at least a part of the environment of the vehicle (1), which is installed at the vehicle (1) and which feeds initial signals into the at least one electronic control apparatus (12) and is configured to
b1) be able, on the basis of a temporally constant determined position of at least one detected external object (20) in relation to the at least one environment detecting sensor (4), to recognize a standstill of the motor vehicle (1) in relation to the at least one external object (20), and to
b2) be able, on the basis of a temporal change in the determined position of the at least one detected external object (20) in relation to the at least one environmental detecting sensor (4) to recognize a relative movement of the vehicle (1) in relation to the at least one external object (20), wherein
c) the electronic control apparatus (12) and the at least one environment detecting sensor (4) interact together such that in the case that, starting from a standstill of the vehicle (1) recognized by the at least one environment detecting sensor (4) by means of the at least one environment detecting sensor (4) an undesired or uncontrolled relative movement of the vehicle (1) in relation to the at least one external object (20) is recognized, the electronic control apparatus (12) is prompted to actuate the braking apparatus automatically order to increase a braking effect already effected by a braking apparatus, **characterised in that**
d) the electronic control apparatus (12) is configured to recognize an undesired or uncontrolled relative movement of the vehicle (1) in relation to the at least one external object (20), in the case that a verification has revealed that there is no valid control signal for a driving or rolling of the vehicle (1).

9. Rolling or driving prevention device according to claim 8, **characterised in that** the electronic control apparatus (12) is configured, in the case of a standstill of the vehicle (1) recognized by the at least one environment detecting sensor (4), to monitor initial signals of the at least one environment detecting sensor (4) find out whether an undesired or uncontrolled rolling or driving of the vehicle is taking place or has taken place.

10. Rolling or driving prevention device according to any of claims 8 and 9, **characterised in that** the electronic control apparatus (12) is configured to recognize an undesired or uncontrolled rolling or driving of the vehicle (1) on the basis of the initial signals of the at least one environment detecting sensor (4) when the initial signals imply that the vehicle (1) is exceeding or has exceeded a predetermined threshold speed.

11. Rolling or driving prevention device according to any of claims 8 to 10, **characterised in that** the braking apparatus is a service braking apparatus or a parking braking apparatus of the vehicle.

12. Rolling or driving prevention device according to any of claims 8 to 11, **characterised in that** the initial signals of the at least one environment detecting sensor (4) are in addition evaluated within at least one of the following driver assistance systems of the vehicle (1):
a blind spot assistance system, an emergency braking assistance system, a pedestrian detecting system, a lane keeping assistance system, an adaptive cruise control (ACC) system, a parking assistance system.

13. Rolling or driving prevention device according to any of claims 8 to 12, **characterised in that** the at least one environment detecting sensor (4) is one of the following environment detecting sensors: an ultrasound sensor, a camera, a lidar sensor, an infrared sensor, a radar sensor.

14. Rolling or driving prevention device according to any of claims 8 to 13, **characterised in that** the at least one environment detecting sensor (4) is configured to recognize a direction of movement of the vehicle (1) relative to the at least one external object (20).

15. Vehicle having a rolling or driving prevention device according to any of claims 8 to 14.

16. Vehicle controlled according to a method according to any of claims 1 to 7.

## Revendications

1. Procédé pour empêcher un véhicule (1) se trouvant à l'arrêt de rouler ou de démarrer de manière intempestive ou incontrôlée, dans lequel
a) au moins un appareil de commande électronique (12) peut actionner un appareil de freinage ou augmenter une action de freinage déjà exercée par un appareil de freinage, et dans lequel
b) par au moins un capteur de détection d'environnement (4) détectant au moins une partie de l'environnement du véhicule (1), lequel est monté sur le véhicule (1),
b1) sur la base d'une position constatée constante dans le temps d'au moins un objet externe (20) détecté par rapport à l'au moins un capteur de détection d'environnement (4), un arrêt du véhicule (1) par rapport à l'au moins un objet externe (209) peut être détecté, et
b2) sur la base d'une modification dans le temps de la position constatée de l'au moins un objet externe (20) détecté par rapport à l'au moins un capteur de détection d'environnement (4), un mouvement relatif du véhicule (1) par rapport à l'au moins un objet externe (20) peut être détecté, dans lequel
c) si, à partir d'un arrêt du véhicule (1) détecté par l'au moins un capteur de détection d'environnement (4), un mouvement relatif intempestif ou incontrôlé du véhicule (1) par rapport à l'au moins un objet externe (20) est détecté par l'au moins un capteur de détection d'environnement (4), l'appareil de commande électronique (12) est amené à actionner automatiquement l'appareil de freinage ou à augmenter une action de freinage déjà exercée par l'appareil de freinage, **caractérisé en ce que**
d) un mouvement relatif intempestif ou incontrôlé du véhicule (1) par rapport à l'au moins un objet externe (20) est détecté si un contrôle a montré qu'il n'y a pas de signal de commande valable pour un démarrage ou un roulement du véhicule (1).

2. Procédé selon la revendication 1, **caractérisé en ce que**, lors d'un arrêt du véhicule (1) détecté par l'au moins un capteur de détection d'environnement (4), les signaux initiaux de l'au moins un capteur de détection d'environnement (4) sont alors surveillés pour déterminer si un roulement ou un démarrage intempestif ou incontrôlé du véhicule (1) à partir de l'arrêt a lieu ou a eu lieu.

3. Procédé selon l'une quelconque des revendications précédentes, **caractérisé en ce qu'**un roulement ou un démarrage intempestif ou incontrôlé du véhicule (1) est détecté sur la base des signaux initiaux de l'au moins un capteur d'environnement (4) lorsqu'il est constaté, sur la base des signaux initiaux, que le véhicule (1) dépasse ou a dépassé une vitesse limite prédéterminée par rapport à l'au moins un objet externe (20).

4. Procédé selon l'une quelconque des revendications précédentes, **caractérisé en ce que** l'appareil de freinage est un appareil de freinage de service ou un appareil de freinage de stationnement du véhicule.

5. Procédé selon l'une quelconque des revendications précédentes, **caractérisé en ce que** les signaux initiaux de l'au moins un capteur de détection d'environnement (4) sont en outre évalués au sein d'au moins un des systèmes d'assistance à la conduite suivants du véhicule : un système d'assistance aux angles morts, un système d'assistance de freinage d'urgence, un système de détection des piétons, un système d'assistance au maintien de voie de circulation, un système Adaptive Cruise Control (ACC), un système d'aide au stationnement.

6. Procédé selon l'une quelconque des revendications précédentes, **caractérisé en ce que** l'un des capteurs de détection d'environnement suivants est utilisé en tant que l'au moins un capteur de détection d'environnement (4) : un capteur à ultrasons, une caméra, un capteur LiDAR, un capteur infrarouge, un capteur radar.

7. Procédé selon l'une quelconque des revendications précédentes, **caractérisé en ce que** l'au moins un capteur de détection d'environnement (4) est conçu de sorte qu'il détecte une direction de mouvement du véhicule (1) par rapport à l'au moins un objet externe (20).

8. Dispositif d'empêchement de roulement ou de démarrage pour empêcher un véhicule (1) se trouvant à l'arrêt de rouler ou de démarrer de manière intempestive ou incontrôlée, avec
a) au moins un appareil de commande électronique (12) qui est conçu de manière à pouvoir actionner un appareil de freinage ou augmenter une action de freinage déjà exercée par un appareil de freinage, et avec
b) au moins un capteur de détection d'environnement (4) détectant au moins une partie de l'environnement du véhicule (1), capteur qui est monté sur le véhicule (1) et commande des signaux initiaux dans l'au moins un appareil de commande électronique (12) et est conçu de sorte qu'il peut
b1) sur la base d'une position constatée constante dans le temps d'au moins un objet externe (20) par rapport à l'au moins un capteur de détection d'environnement (4), détecter un arrêt du véhicule (1) par rapport à l'au moins un objet externe (20), et qu'il peut
b2) sur la base d'une modification dans le temps de la position constatée de l'au moins un objet externe (20) par rapport à l'au moins un capteur de détection d'environnement (84), détecter un mouvement relatif du véhicule (1) par rapport à l'au moins un objet externe (20), dans lequel
c) l'appareil de commande électronique (12) et l'au moins un capteur de détection d'environnement (4) interagissent de sorte que si, à partir d'un arrêt du véhicule (1) détecté par l'au moins un capteur de détection d'environnement (4), un mouvement relatif du véhicule (1) par rapport à l'au moins un objet externe (20) est détecté par l'au moins un capteur de détection d'environnement (4), l'appareil de commande électronique (12) est amené à actionner automatiquement l'appareil de freinage ou à augmenter une action de freinage déjà exercée par l'appareil de freinage, **caractérisé en ce que**
d) l'appareil de commande électronique (12) est conçu pour détecter un mouvement relatif intempestif ou incontrôlé du véhicule (1) par rapport à l'au moins un objet externe (20) s'il a constaté par l'intermédiaire d'un contrôle qu'il n'y a pas de signal de commande valable pour un démarrage ou un roulement du véhicule (1).

9. Dispositif d'empêchement de roulement ou de démarrage selon la revendication 8, **caractérisé en ce que** l'appareil de commande électronique (12) est conçu de sorte que lors d'un arrêt du véhicule (1) détecté par l'au moins un capteur de détection d'environnement (4), il surveille les signaux initiaux de l'au moins un capteur de détection d'environnement (4) pour déterminer si un roulement ou un démarrage intempestif ou incontrôlé du véhicule (1) à partir de l'arrêt a lieu ou a eu lieu.

10. Dispositif d'empêchement de roulement ou de démarrage selon l'une quelconque des revendications 8 ou 9, **caractérisé en ce que** l'appareil de commande électronique (12) est conçu de sorte qu'il détecte un roulement ou un démarrage intempestif ou incontrôlé du véhicule (1) sur la base des signaux initiaux de l'au moins un capteur de détection d'environnement (4) lorsque les signaux initiaux indiquent qu'une vitesse limite prédéterminée est dépassée ou a été dépassée.

11. Dispositif d'empêchement de roulement ou de démarrage selon l'une quelconque des revendications 8 à 10, **caractérisé en ce que** l'appareil de freinage est un appareil de freinage de service ou un appareil de freinage de stationnement du véhicule.

12. Dispositif d'empêchement de roulement ou de démarrage selon l'une quelconque des revendications 8 à 11, **caractérisé en ce que** les signaux initiaux de l'au moins un capteur de détection d'environnement (4) sont en outre exploités au sein d'au moins un des systèmes d'assistance à la conduite du véhicule (1) suivants :
un système d'assistance aux angles morts, un système d'assistance de freinage d'urgence, un système de détection des piétons, un système d'assistance au maintien de la voie de circulation, un système Adaptive Cruise Control (ACC), un système d'aide au stationnement.

13. Dispositif d'empêchement de roulement ou de démarrage selon l'une quelconque des revendications 8 à 12, **caractérisé en ce que** l'au moins un capteur de détection d'environnement (4) est un des capteurs de détection d'environnement suivants : un capteur à ultrasons, une caméra, un capteur LiDAR, un capteur infrarouge, un capteur radar.

14. Dispositif d'empêchement de roulement ou de démarrage selon l'une quelconque des revendications 8 à 13, **caractérisé en ce que** l'au moins un capteur de détection d'environnement (4) est conçu de sorte qu'il détecte une direction de mouvement du véhicule (1) par rapport à l'au moins un objet externe (20).

15. Véhicule avec un dispositif d'empêchement de roulement ou de démarrage selon l'une quelconque des revendications 8 à 14.

16. Véhicule commandé par un procédé selon l'une quelconque des revendications 1 à 7.
